# EUROPÄISCHE PATENTANMELDUNG

(11) **EP 0 865 133 A2**
(43) Veröffentlichungstag der Anmeldung: **16.09.1998**
(21) Anmeldenummer: 97122759.0
(22) Anmeldetag: 23.12.1997
(51) Int. Cl.: H02G 5/06

(54) **Abhängbare mehrpolige Schleifleitung**

(30) Priorität: 22.01.1997 DE 19701987
(71) Anmelder: Paul Vahle GmbH & Co. KG, D-59174 Kamen (DE)
(72) Erfinder: Buschmann, Wilhelm, 59174 Kamen (DE)
(74) Vertreter: Henfling, Fritz, Dipl.-Ing.

(57) **Zusammenfassung**

Zwecks Erleichterung der Installation einer abhängbaren mehrpoligen Schleifleitung, bestehend aus einem Kunststoff-Strangpreßprofil (12) mit einer planen Basis (121) und von der Basis gleichsinnig beabstandet ausgehenden, paarweise sich am Grund des Profils abstützende elektrische Leiter (13) mit Überstand eingrenzenden Stegen (122, 122'...), mit beidseitigem Überstand (127, 127') der Basis (121) des Profils (12), wird als Ausgangsmaterial ein flexibles, wickelbares Kunststoff-Strangpreßprofil (12), ein wickelbarer Flachleiter (13) und ein U-profilförmiger, das Kunststoff-Strangpreßprofil (12) der Leitung über die Länge der Leitung mit seinen Schenkeln (212, 212') klemmend einfassender, ggf. mehrschüssiger Träger (21) vorgesehen, von denen das Kunststoff-Strangpreßprofil (12) und die Flachleiter (13) in Wickeln als Endlosmaterial an den Verlegungsort anlieferbar sind, wo die Bestandteile (12, 13, 21) der Schleifleitung, ausgelegt auf den Installationsbereich, zusammenfaßbar sind.

## Beschreibung

Die Erfindung betrifft eine abhängbare mehrpolige Schleifleitung, bestehend aus einem Kunststoff-Strangpreßprofil mit einer planen Basis und von der Basis gleichsinnig beabstandet ausgehenden Stegen, von denen jeweils zwei einen sich am Grund des Profils abstützenden elektrischen Leiter mit Überstand eingrenzen, mit beidseitigem Überstand über die Basis des Profils. Eine solche Schleifleitung ist dem Firmenkatalog Nr. 4b/D83 der Paul Vahle GmbH & Co. KG zu entnehmen.

Nach dem Stand der Technik werden das Kunststoff-Strangpreßprofil und die zusammen mit dem Kunststoff-Strangpreßprofil die mehrpolige Schleifleitung bildenden elektrischen Leiter entweder als Meterware in bereits zusammengefügtem Zustand oder aber als Endlosmaterial gesondert bereit gehalten, wobei die elektrischen Leiter dem Kunststoff-Strangpreßprofil erst am Verlegungsort zugeordnet, d.h. in das Kunststoff-Strangpreßprofil hineingezogen bzw. in das Profil eingesprengt werden. Die komplette Schleifleitung wird über in Abständen an der Schleißeitung angesetzte U-profilförmige, die Schleifleitung mit ihren Schenkein einfassende Kalter abgehängt. Wird bei der Installation der Schleifleitung auf Meterware zurückgegriffen, bedarf es der leitenden Verbindung der Leiter aufeinanderfolgender, den Installationsbereich abdeckender Schüsse. Unter Rückgriff auf Endlosmaterial hergestellte Schleifleitungen, die über in Abständen an ihnen angesetzte Träger abgehängt werden, sind so instabil, daß einen Ends der Leitung eine Spannvorrichtung angesetzt werden muß, die die Schleifleitung im Verlegungszustand eindeutig lageorientiert fixiert.

Ausgehend von diesem Stand der Technik liegt der Erfindung die Aufgabe zugrunde, eine gattungsgemäße mehrpolige Schleifleitung in einer Weise auszugestalten, daß sich ihre Verlegung vereinfacht.

Die Aufgabe wird mit einer gattungsgemäßen Schleifleitung gelöst, die erfindungsgemäß durch folgende Merkmale gekennzeichnet ist:
ein flexibles wickelbares Kunststoff-Strangpreßprofil mit in die am Kunststoff-Strangpreßprofil ausgebildeten Aufnahmen für die Leiter eingefügten, wickelbaren Flachleitern,
sowie einen an einem Widerlager abhängbaren bzw. ansetzbaren, sich über die Länge des Installationsbereichs erstreckenden, ggf. mehrschüssigen U-profilförmigen, das Kunststoff-Strangpreßprofil der Leitung mit seinen Schenkeln klemmend einfassenden Träger.

Ausgestaltungen der Erfindung ergeben sich aus den Unteransprüchen 2 bis 11.

Für einen speziellen Anwendungsfall ist zwar auch schon eine elektrische Schleifleitung vorgeschlagen worden (DE-A1-30 09 054), die aus einem wickelbaren Gummi- oder Kunststoffprofil besteht, das Aufnahmen für biegsame Schleifleiter aufweist, dieses mit den Schleifleitern versehene Isolierprofil wird vor seiner Verlegung allerdings zu einem schlauchförmigen Kanal ausgeformt, der von stoßenden oder überlappenden Stahlrohrabschnitten getragen wird.

Die Schleifleitung nach der Erfindung eröffnet die Möglichkeit, die Bestandteile der Leitung, also das Kunststoff-Strangpreßprofil und die dem Kunststoff-Strangpreßprofil zuzuordenden Flachleiter, ingestalt von Wickeln als Endlosmaterial an den Verlegungsort zu verbringen bei entsprechender Dimensionierung dann auch bereits in zusammengefügter Form, wobei die Leiter von vornherein in das Kunststoff-Strangpreßprofil einextrudiert sein können. Zusammen mit dem Vormaterial bzw. dem Leitungswickel werden handhabbare Trigerschüsse für die zu installierende Schleifleitung bereitgestellt, die zunächst, die Schüsse stoßend den Installationsbereich abdeckend, angehängt werden. In den so gebildeten Trägerkanal wird die vom Endlosmaterial auf die Länge des Installationsbereichs ausgelegte Schleifleitung sodann eingesprengt und an das Energieversorgungsnetz angeschlossen. Der nach der Erfindung vorgesehene Trägerkanal erübrigt zusätzliche Maßnahmen für die eindeutige Lageorientierung der Schleifleitung.

Sind in den Schenkein der den Trägerkanal ausbildenden Trägerschüsse nach innen orientierte Längssicken ausgebildet, wird damit in vorteilhafter Weise die Möglichkeit eröffnet, am Trägerkanal einen Stromabnehmerwagen zu führen.

In der Zeichnung ist die Erfindung weitergehend in ganz schematischer Weise erläutert. Es zeigen:

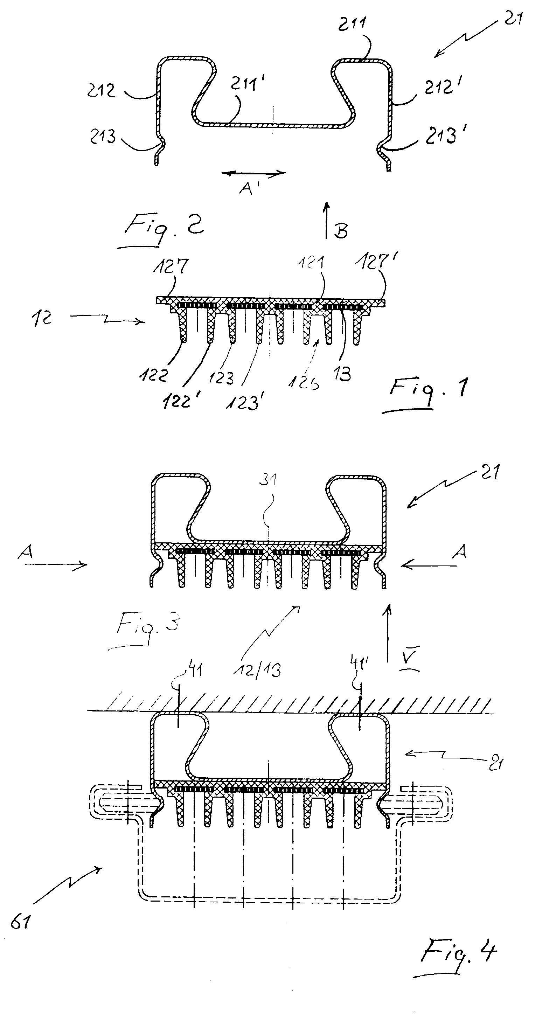

- Figur 1: eine nach der Erfindung zum Einsatz kommende Schleifleitung im Querschnitt,
- Figur 2: den nach der Erfindung zum Einsatz kommenden Trägerkanal im Querschnitt,
- Figur 3: die mit dem Trägerkanal zusammengefaßte Schleifleitung im Querschnitt,
- Figur 4: die an einem Widerlager abgehängte Schleifleitung im Querschnitt,
- Figur 5: eine Ansicht der abgebrochenen Schleifleitung in Richtung des Pfeiles V in Figur 3.

Die Schleifleitung 11 besteht aus dem Kunststoff-Strangpreßprofil 12 und den in das Profil eingelagerten Leitern 13. Das Kunststoff-Strangpreßprofil 12 weist eine plane Basis 121 auf, von der beabstandet gleichsinnig orientierte Stege 122, 122', 123, 123'... ausgehen, die paarweise, z.B. 122, 122', die dem Kunststoff-Strangpreßprofil 11 zugeordneten Leiter 13 eingrenzen, wobei zwischen aufeinanderfolgenden Stegpaaren, z.B. 122, 122' und 123, 123', den V.D.E.-Vorgaben Rechnung tragender Freiraum 126 belassen ist. Die Basis 121 des Kunststoff-Strangpreßprofils 11 weist beidseitig dann auch noch einen Überstand 127, 127' über die von der Basis 121 ausgehenden Außenstege, z.B. 122, auf.

Die Bestandteile der Schleifleitung 11, also das Kunststoff-Strangpreßprofil 12 und die Leiter 13 können gesondert als Endlosmaterial in Form von Wickeln an den Verlegungsort der Schleifleitung verbracht werden, ein den Installationsbereich abdeckendes Stück des Kunststoff-Strangpreßprofils von dem Profil-Wickel abgelängt und in entsprechenden Längen von einem Leiterwickel abgelängte Leiterstücke 13 vor Ort dem Kunststoff-Strangpreßprofil 12 zugeordnet werden. Bei entsprechender Dimensionierung, insbesondere des Leiters 13, die die Wickelbarkeit des Kunststoff-Strangpreßprofils 12 mit ihm bereits zugeordneten Leitern 13 beläßt, kann aber auch die Anlieferung der kompletten Schleifleitung 12, 13 an den Verlegungsort erfolgen. Es ist in fertigungstechnisch günstiger Weise dann auch möglich, die Leiter bei der Herstellung des Kunststoff-Strangpreßprofils von vornherein mit in das Profil einzuarbeiten.

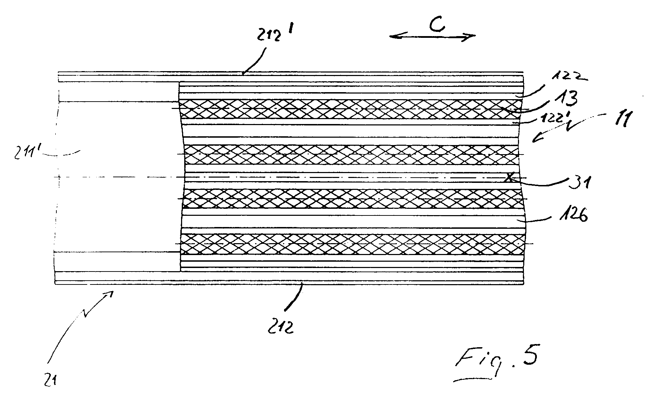

Installiert wird die Schleifleitung 11 mit Hilfe eines sich über die gesamte Länge der Schleifleitung 11 erstreckenden U-profilförmig ausgebildeten Trägerkanals, zwischen dessen Schenkel die Schleifleitung 11 eingesprengt wird. Eine bevorzugte Ausführungsform des Trägerkanals ist Figur 2 zu entnehmen. Danach springt der Steg 211 des Trägerkanals 21 im Abstand von den Schenkeln 212, 212' in das Innere des Profils zurück (211'). Des weiteren ist in den Schenkeln 212, 212' des U-Profils in übereinstimmendem Abstand vom zurückspringenden Stegbereich 211' je eine nach innen orientierte Längssicke 213, 213' ausgebildet. Der zurückspringende Stegbereich 211' des Trägerkanals 21 definiert die Zuordnung der Schleifleitung 11 zum Trägerkanal 21, der im Trägerkanal bei dieser Version des Kanals durch Kraft- und Formschluß fixiert ist, und zwar durch Kraftschluß aufgrund der Klemmkraft der die Schleifleitung 11 eingrenzenden Schenkel 212, 212' des Trägerkanals 21 (Pfeile A in Figur 3) sowie durch aus der Sickung der Schenkel resultierendem Formschluß. Zusätzlich ist die Schleifleitung 11 am zurückspringenden Stegbereich 211 des Trägerkanals an einer Stelle geheftet (31), um ein Wandern der Leitung mit Sicherheit auszuschließen.

Verlegt wird die Schleifleitung, indem sie in den vorweg abgehängten (41, 41' in Figur 4) Trägerkanal 21 beispielsweise des der Figur 2 entnehmbaren Querschnitts eingesprengt wird (Pfeil B in Figur 2), der aus handhabbaren, stoßend verlegten Schüssen gebildet wird, und zwar unter Spreizung (Doppelpfeil A' in Figur 2) der Schenkel 211, 211' des Trägerkanals 21. Um ein Wandern der Leiterbahn 11 im Trägerkanal 21 im Sinne des Doppelpfeiles C in Figur 5 mit Sicherheit auszuschließen, kann die Schleifleitung 11 mit dem Trägerkanal 21 zusätzlich in Abständen durch Heftung (31) verbunden sein.

Die in den Schenkeln 212, 212' des U-profilförmigen Trägerkanals 21 ausgebildeten Längssicken 213, 213' bieten sich dann auch zum Ansetzen und Führen eines Stromabnehmerwagens an, der in Figur 4 angedeutet ist (61).

## Patentansprüche

1. Abhängbare mehrpolige Schleifleitung, bestehend aus einem Kunststoff-Strangpreßprofil mit einer planen Basis und von der Basis gleichsinnig beabstandet ausgehenden Stegen, von denen jeweils zwei einen sich am Grund des Profils abstützenden elektrischen Leiter mit Überstand eingrenzen, mit beidseitigem Überstand über die Basis des Profils, gekennzeichnet durch folgende Merkmale:
ein flexibles, wickelbares Kunststoff-Strangpreßprofil (12) mit in die am Kunststoff-Strangpreßprofil (12) ausgebildeten Aufnahmen für die Leiter eingefügten, wickelbaren Flachleitern (13),
sowie einen an einem Widerlager abhängbaren bzw. ansetzbaren, sich über die Länge des Installationsbereichs erstreckenden, U-profilförmigen, das Kunststoff-Strangpreßprofil (12) der Leitung mit seinen Schenkeln klemmend einfassenden Träger (21).

2. Schleifleitung nach Anspruch 1, dadurch gekennzeichnet, daß die Leitung (12, 13) mit dem Träger 21 durch eine Heftung verbunden ist.

3. Schleifleitung nach Anspruch 1 oder Anspruch 2, gekennzeichnet durch sich in Rücksprünge im Grund der an, Kunststoff-Strangpreßprofil (12) ausgebildeten Aufnahmen für die Leiter (13) einfügende Leiter (13).

4. Schleifleitung nach einem der Ansprüche 1 bis 3, gekennzeichnet durch Leiter (13) mit einer eingewölbten Lauffläche für die daran entlang gleitenden Schleifkörper.

5. Schleifleitung nach einem der Ansprüche 1 bis 4, gekennzeichnet durch in das Kunststoff-Strangpreßprofil (12) einextrudierte Leiter (13).

6. Schleifleitung nach einem der Ansprüche 1 bis 5, gekennzeichnet durch einen Träger (21) für die Leitung (12, 13) aus Federstahl.

7. Schleifleitung nach einem der Ansprüche 1 bis 5, gekennzeichnet durch einen Träger (21) für die Leitung (12, 13) aus einer Federeigenschaften aufweisenden Aluminiumlegierung.

8. Schleifleitung nach einem der Ansprüche 1 bis 5, gekennzeichnet durch einen Träger (21) für die Leitung (12, 13) aus elastisch verformbaren Kunststoff.

9. Schleifleitung nach einem der Ansprüche 1 bis 8, dadurch gekennzeichnet, daß der Steg (211) des Trägers (21) im Abstand von den Schenkein (212, 212') eine Anlagefläche für die dem Träger (21) zugeordnete Leitung (12, 13) ausbildend, zurückspringt (211').

10. Schleifleitung nach einem der Ansprüche 1 bis 9, dadurch gekennzeichnet, daß in den Schenkein (212, 212') des Trägers (21) in übereinstimmendem Abstand vom Steg (211) je eine nach innen orientierte Längssicke (213, 213') ausgebildet ist.

11. Schleifleitung nach einem der Ansprüche 1 bis 10, dadurch gekennzeichnet, daß der Träger (21) aus handhabbaren, stoßend zu verlegenden Schüssen zusammengesetzt ist.
